# EUROPEAN PATENT APPLICATION

(11) **EP 1 894 801 A2**
(43) Date of publication of application: **05.03.2008**
(21) Application number: 07015814.2
(22) Date of filing: 10.08.2007
(51) Int. Cl.: B60T 8/32, B60T 8/40, B60T 8/88, B60T 8/94, B60T 13/68, B60T 17/18

(54) **Brake control system**

(30) Priority: 28.08.2006 JP 2006230615
(71) Applicant: Hitachi, Ltd., Chiyoda-ku Tokyo 100-8280 (JP)
(72) Inventor: Matsubara, Kenichiro c/o Hitachi, Ltd., Chiyoda-ku Tokyo 100-8220 (JP); Kobayashi, Hitoshi c/o Hitachi, Ltd., Chiyoda-ku Tokyo 100-8220 (JP); Innami, Toshiyuki c/o Hitachi, Ltd., Chiyoda-ku Tokyo 100-8220 (JP); Nishino, Kimio c/o Hitachi, Ltd., Chiyoda-ku Tokyo 100-8220 (JP); Sugawara, Toshiharu c/o Hitachi, Ltd., Chiyoda-ku Tokyo 100-8220 (JP); Sato, Akihiro c/o Hitachi, Ltd., Chiyoda-ku Tokyo 100-8220 (JP); Wakabayashi, Katsuhiko c/o Hitachi, Ltd., Chiyoda-ku Tokyo 100-8220 (JP)
(74) Representative: Beetz & Partner

(57) **Abstract**

The invention relates to a brake control system (1) including a plurality of fluid channels (51,53,61-74) communicating from a hydraulic pressure source (41) to a reservoir (17) for controlling brake hydraulic pressures supplied to respective brake calipers (19a,19b) by a plurality of hydraulic pressure control valves (43) arranged in the respective fluid channels, wherein valve drive circuits (21) for controlling the hydraulic pressure control valves (43) are provided, two power relays (8,9) for supplying power are connected to the plurality of valve drive circuits (21) and when all hydraulic pressure control valves (43a,43b) arranged in one fluid channel are normally open valves which communicate the hydraulic pressure source (41) to the reservoir (17) when nonenergized, different power relays (8,9) are used for at least two valve drive circuits (21a,21b) in the valve drive circuit corresponding to all the hydraulic pressure control valves to thereby prevent a malfunction of one power relay from causing all brake hydraulic pressures to fall.

## Description

### Background of the Invention

The present invention relates to a brake control system mounted on a vehicle, and more particularly, to a power supply system for a plurality of valve drive circuits.

As a conventional technique for a brake control system having a fail safe function, for example, JP-A-10-217936 discloses that an electric hydraulic pressure control valve and an electric switching valve are connected in parallel to a power supply via a power supply relay provided for each electric hydraulic pressure control valve or each group of a plurality of electric hydraulic pressure control valves.

According to the JP-A-10-217936, operation error detection means for detecting operation errors is provided for each electric hydraulic pressure control valve or each group of a plurality of electric hydraulic pressure control valves and when an operation error is detected by this detection means, the power supply relay is controlled so as to selectively connect a wheel cylinder to a master cylinder for only an electric switching valve corresponding to an electric hydraulic pressure control valve or a group of electric hydraulic pressure control valves in which the operation error detection means has detected the error.

### Brief Summary of the Invention

In the prior art brake control system as disclosed by JP-A-10-217936, since an electric power source is connected through one of the power supply relays to a plurality of the electric hydraulic pressure control valves, a malfunction of the one of the power supply relays causes a control stop of the plurality of the electric hydraulic pressure control valves.

An object of the present invention is to provide a reliable brake control system by which a malfunction of making the control valve out of control does not affect a plurality of wheels to be braked and a sufficient braking force is applicable to the wheels.

To achieve the above object, the invention may have the following structures.

A brake control system comprises a hydraulic power source, a hydraulic reservoir, a plurality of hydraulic flow paths extending from the hydraulic power source to the hydraulic flow paths, and/or a plurality of hydraulic control valves arranged on the hydraulic flow paths to control hydraulic braking pressures supplied to respective brake calipers,
wherein the system further comprises:
valve drive circuits for driving electrically the hydraulic control valves respectively, and/or
one of a combination of at least two electric power source breakers as switch elements connected electrically to the valve drive circuits respectively to supply the electric power to the valve drive circuits and a combination of at least two electric power source systems as the switch elements connected electrically to the valve drive circuits respectively to supply the electric power to the valve drive circuits,
wherein all of the hydraulic control valves on one of the hydraulic flow paths are normally open valves for allowing a fluidal communication between the hydraulic power source and the hydraulic reservoir when being prevented from electrically energized, and/or at least two of the valve drive circuits for driving respectively the all of the hydraulic control valves are electrically connected respectively to the switch elements of the one of the combination so that a failure in supplying the hydraulic braking pressures to all of the calipers is prevented when a malfunction of one of the switch elements of the one of the combination occurs.

A brake control system comprises a hydraulic power source, a hydraulic reservoir, a plurality of hydraulic flow paths extending from the hydraulic power source to the hydraulic flow paths, and/or a plurality of hydraulic control valves arranged on the hydraulic flow paths to control hydraulic braking pressures supplied to respective brake calipers,
wherein the system further comprises:
valve drive circuits for driving electrically the hydraulic control valves respectively, and/or
one of a combination of at least two electric power source breakers as switch elements connected electrically to the valve drive circuits respectively to supply the electric power to the valve drive circuits and a combination of at least two electric power source systems as the switch elements connected electrically to the valve drive circuits respectively to supply the electric power to the valve drive circuits,
wherein at least two of the valve drive circuits for driving respectively ones of the hydraulic control valves which ones are proximate to the hydraulic reservoir on the hydraulic flow paths respectively to supply the hydraulic braking pressures to the respective brake calipers are electrically connected respectively to the switch elements of the one of the combination so that a failure in supplying the hydraulic braking pressures to all of the brake calipers is prevented when a malfunction of one of the switch elements of the one of the combination occurs.

A brake control system comprises a hydraulic power source, a hydraulic reservoir, a plurality of hydraulic flow paths extending from the hydraulic power source to the hydraulic flow paths, and/or a plurality of hydraulic control valves arranged on the hydraulic flow paths to control hydraulic braking pressures supplied to respective brake calipers,
wherein the system further comprises:
valve drive circuits for driving electrically the hydraulic control valves respectively, and/or
one of a combination of at least two electric power source breakers as switch elements connected electrically to the valve drive circuits respectively to supply the electric power to the valve drive circuits and a combination of at least two electric power source systems as the switch elements connected electrically to the valve drive circuits respectively to supply the electric power to the valve drive circuits,
wherein the valve drive circuits for driving respectively ones of the hydraulic control valves which ones are proximate to the hydraulic power source on the hydraulic flow paths respectively to shut off a fluidal communication between the hydraulic power source and the hydraulic reservoir as normally close valves when being electrically deenergized are electrically connected respectively to the switch elements of the one of the combination so that a failure in supplying the hydraulic braking pressures to all of the brake calipers is prevented when a malfunction of one of the switch elements of the one of the combination occurs.

According to the invention, the malfunction of making the control valve out of control does not affect a plurality of brake calipers to be driven by the braking hydraulic pressure and the sufficient braking force is applicable to the wheels.

The above features can be combined in any way partly or as a whole.

Other objects, features and advantages of the invention will become apparent from the following description of the embodiments of the invention taken in conjunction with the accompanying drawings.

### Brief Description of the Several Views of the Drawings

Fig. 1 is a diagram showing the overall configuration of a brake control system according to a first embodiment of the present invention;
Fig. 2 is a diagram showing the configuration of a valve drive circuit in the brake control system according to the first embodiment;
Fig. 3 is a diagram showing the relationship between a malfunction mode, corrective action taken for each malfunction and braking force on each wheel after the corrective action in the brake control system according to the first embodiment;
Fig. 4 is a diagram showing an example of grouping of valve drive circuits based on predetermined constraints in the brake control system according to the first embodiment;
Fig. 5 is a diagram showing the overall configuration of a brake control system according to a second embodiment of the present invention;
Fig. 6 is a diagram showing an example of grouping of valve drive circuits based on predetermined constraints in the brake control system according to the second embodiment;
Fig. 7 is a diagram showing the overall configuration of a brake control system according to a third embodiment of the present invention; and
Fig. 8 is a diagram showing an example of grouping of valve drive circuits based on another predetermined constraint according to the third embodiment.

### Detailed Description of the Invention

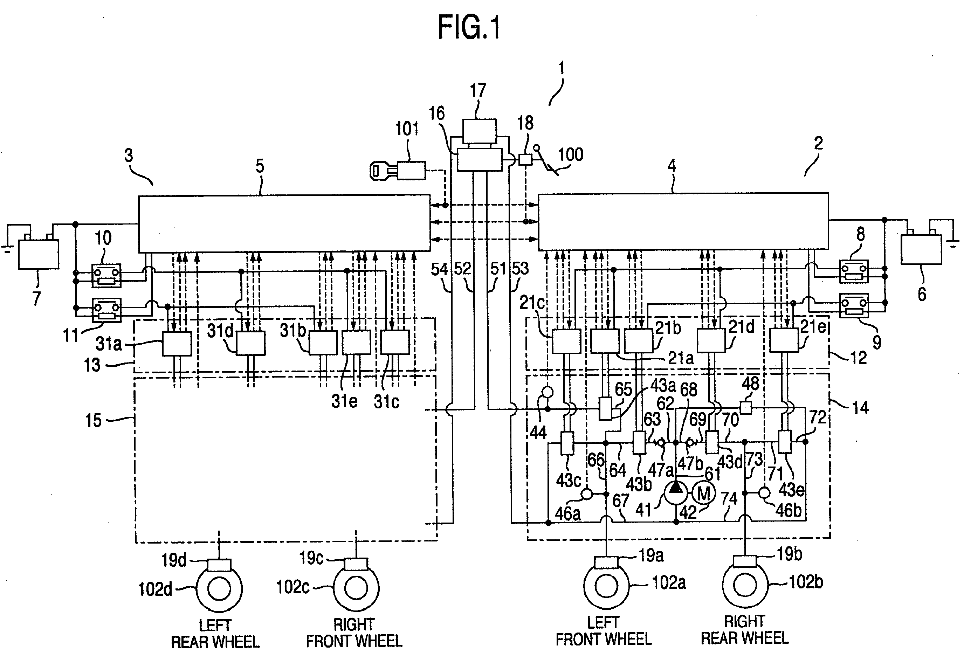

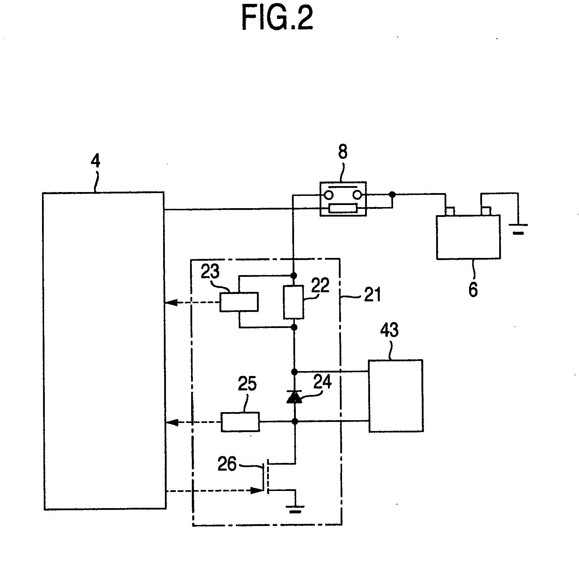

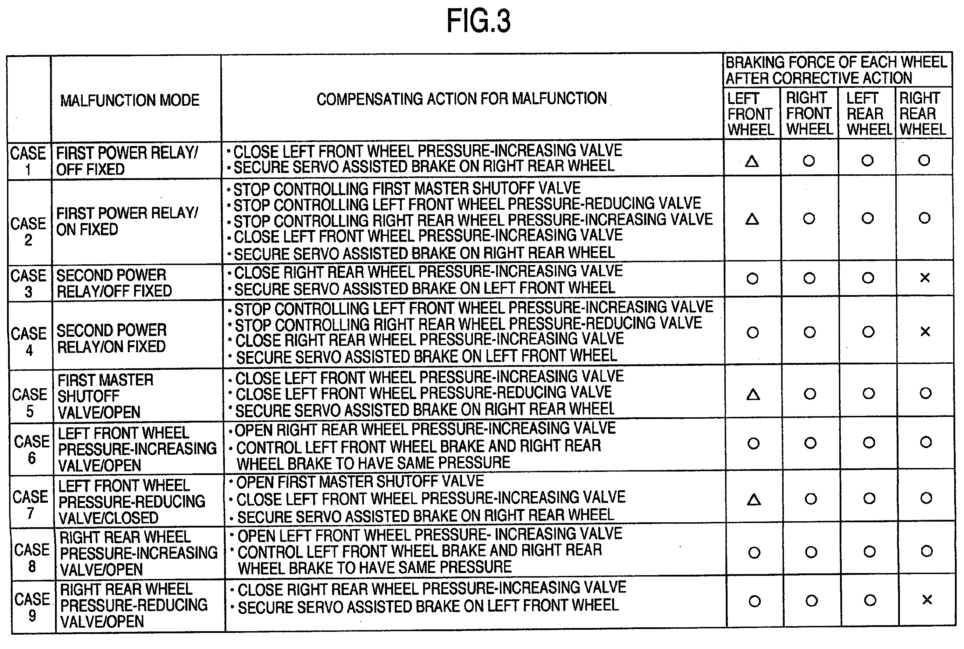

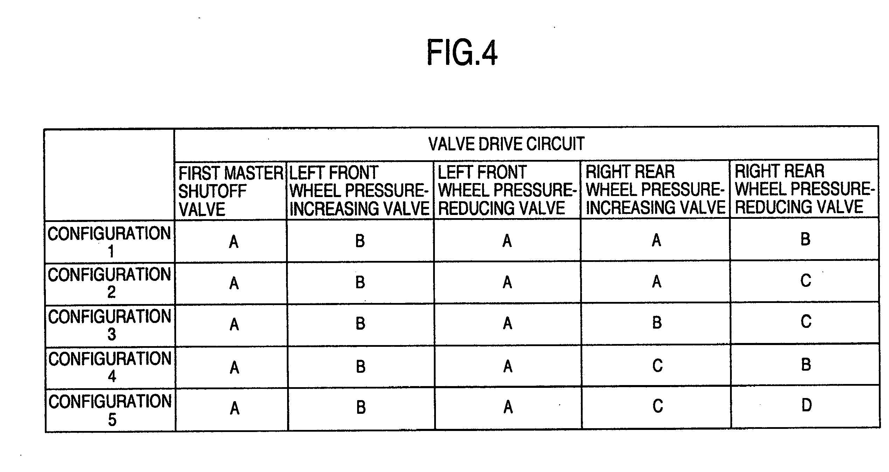

With reference now to the attached drawings, the brake control system according to first, second and third embodiments of the present invention will be explained in detail below. Fig. 1 is a diagram showing the overall configuration of the brake control system according to the first embodiment of the present invention. Fig.2 is a diagram showing the configuration of a valve drive circuit in the brake control system according to the first embodiment. Fig.3 is a diagram showing the relationship between a malfunction mode, corrective action taken for each malfunction and braking force on each wheel after the corrective action in the brake control system according to the first embodiment. Fig.4 is a diagram showing an example of grouping of valve drive circuits based on predetermined constraints in the brake control system according to the first embodiment.

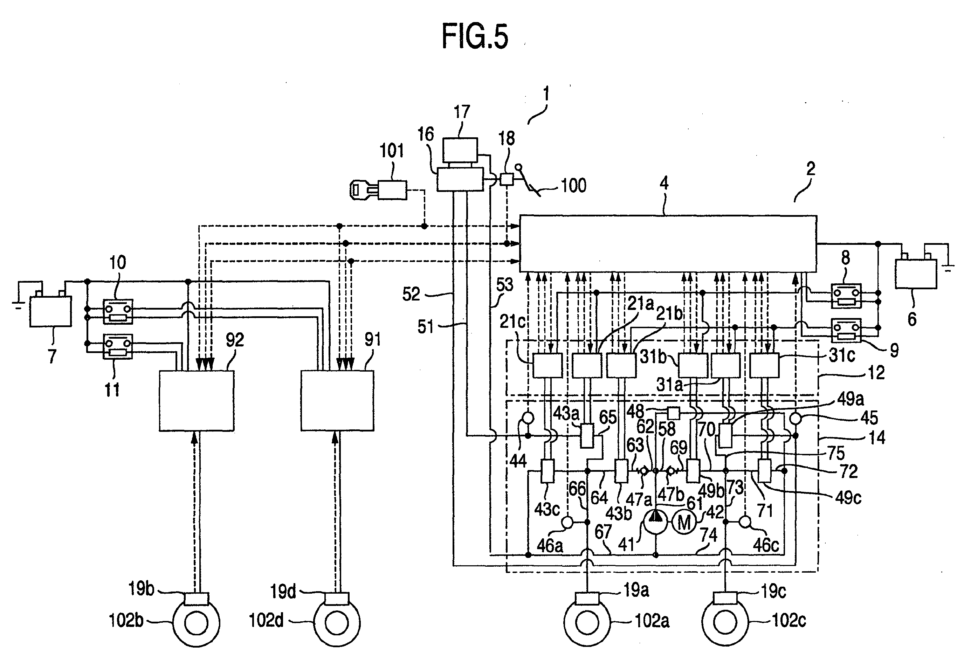

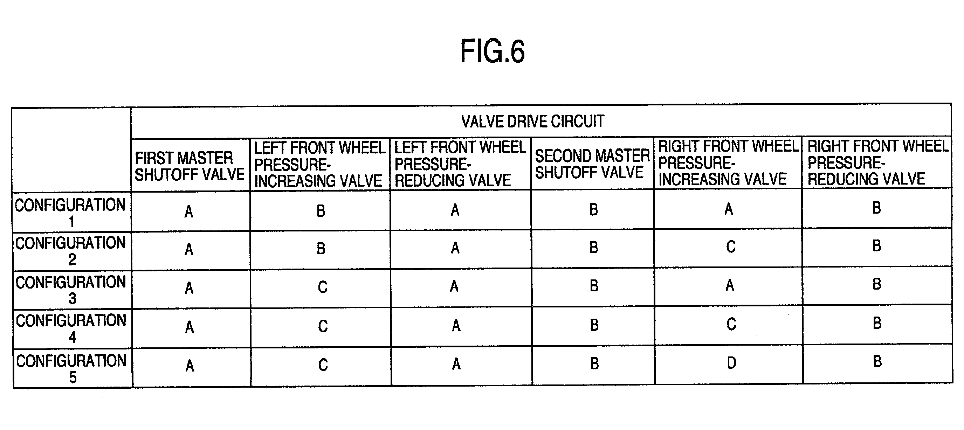

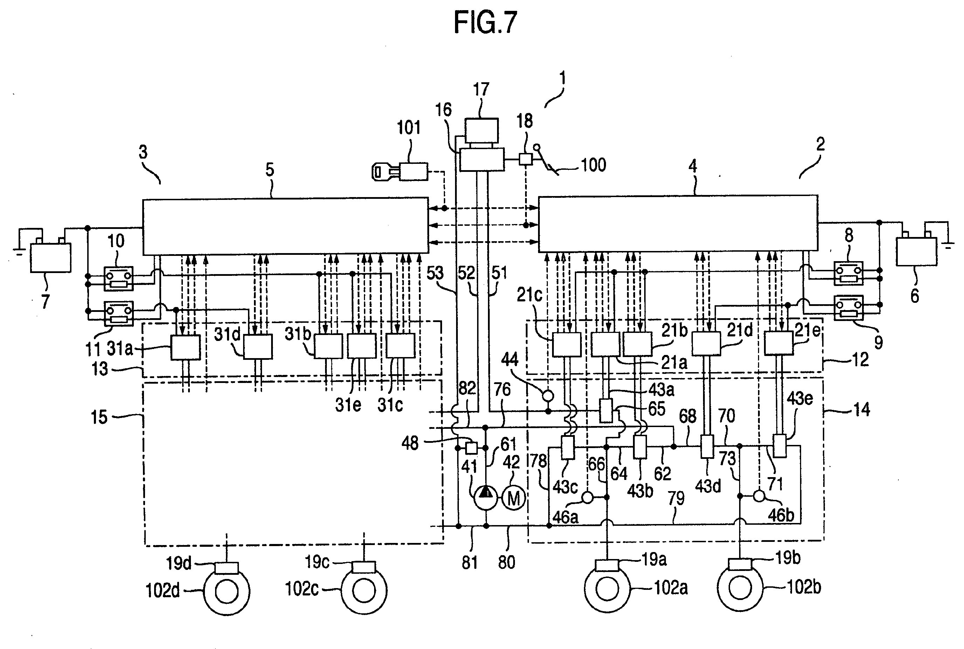

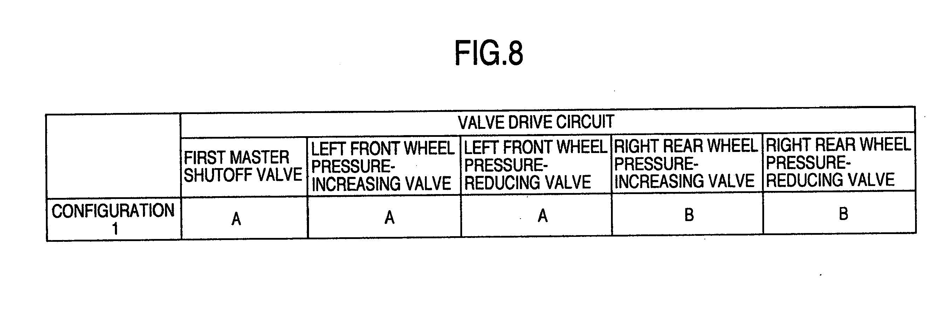

Furthermore, Fig.5 is a diagram showing the overall configuration of a brake control system according to a second embodiment of the present invention. Fig.6 is a diagram showing an example of grouping of valve drive circuits based on predetermined constraints in the brake control system according to second embodiment. Fig.7 is a diagram showing the overall configuration of a brake control system according to a third embodiment of the present invention. Fig.8 is a diagram showing an example of grouping of valve drive circuits based on another predetermined constraint according to the third embodiment.

### [First embodiment]

A brake control system according to a first embodiment of the present invention will be explained with reference to Figs. 1 to 4. In Fig. 1, broken lines with an arrow denote signal lines and the direction of the arrow indicates the flow of a signal. As shown in Fig. 1, the brake control system 1 is provided with first and second braking force control apparatuses 4, 5, first and second power supplies 6, 7, first to fourth power relays 8, 9, 10, 11 as power shutoff means, first and second valve drive circuit groups 12, 13, first and second hydraulic pressure units 14, 15, a master cylinder 16, a reservoir tank 17 as a reservoir, a brake sensor 18 and brake calipers 19. Since the second hydraulic pressure unit 15 has the same configuration as that of the first hydraulic pressure unit 14, illustration of the configuration and explanation thereof will be omitted.

The first braking force control apparatus 4, first power supply 6, first and second power relays 8, 9, first valve drive circuit group 12, first hydraulic pressure unit 14 and brake calipers 19a, 19b constitute a first brake system 2, which is responsible for the control of braking force of the left front wheel and the right rear wheel located at opposite corners of the vehicle. On the other hand, the second braking force control apparatus 5, second power supply 7, third and fourth power relays 10, 11, second valve drive circuit group 13, second hydraulic pressure unit 15 and brake calipers 19c, 19d constitute a second brake system 3, which is responsible for the control of braking force of the right front wheel and the left rear wheel located at the opposite corners of the vehicle.

In this way, since the brake control system 1 according to the first embodiment adopts a 2-system configuration handling two opposite wheels as one system, if the braking force of one system malfunctions, the other system assures the braking forces of the two opposite wheels and it is thereby possible to safely stop both wheels. It is also possible to adopt a 2-system configuration handling the two front wheels as one system and the two rear wheels as one system.

The first valve drive circuit group 12 includes a first master shutoff valve drive circuit 21a (which shuts off the braking force from the master cylinder during a normal operation time and applies a brake pedal force when an error occurs), a left front wheel pressure-increasing valve drive circuit 21b, a left front wheel pressure-reducing valve drive circuit 21c, a right rear wheel pressure-increasing valve drive circuit 21d and a right rear wheel pressure-reducing valve drive circuit 21e. On the other hand, the second valve drive circuit group 13 includes a second master shutoff valve drive circuit 31a, a right front wheel pressure-increasing valve drive circuit 31b, a right front wheel pressure-reducing valve drive circuit 31c, a left rear wheel pressure-increasing valve drive circuit 31d and a left rear wheel pressure-reducing valve drive circuit 31e.

The master cylinder 16 is of a tandem type having two pressurization chambers (not shown) and hydraulic pressures corresponding to the pedal operation quantity of a brake pedal 100 are generated in the respective pressurization chambers. Each pressurization chamber of the master cylinder 16 is connected to the first and second hydraulic pressure units 14, 15 respectively through fluid channels 51, 52 and the brake fluid pressurized by the master cylinder 16 is designed to reach each of the hydraulic pressure units 14, 15. Since this allows the master cylinder 16 to communicate with the brake calipers 19, even if the brake control system 1 is stopped (e.g., the electric system which controls the braking force is out of order) it is possible for the driver to depress the brake pedal 100 and thereby generate a braking force according to the hydraulic pressure of the master cylinder 16 on a predetermined wheel.

The reservoir tank 17 is connected to the master cylinder 16 to fill each pressurizing chamber of the master cylinder 16 with a sufficient amount of the brake fluid so that the brake fluid flows from the pressurizing chamber toward the brake caliper 19 when the brake pedal 100 is depressed. The reservoir tank 17 is connected to the first and second hydraulic pressure units 14, 15 through fluid channels 53, 54 respectively and a necessary brake fluid is supplied from the reservoir tank 17 to each of the hydraulic pressure units 14, 15 and an unnecessary brake fluid returns from each of the hydraulic pressure units 14, 15 to the reservoir tank 17. The reservoir tank 17 may also be made independent of the master cylinder 16 and the two may be arranged at different positions of the vehicle. This improves mountability of the brake control system 1 on the vehicle.

The brake sensor 18 is a sensor which detects a braking force requested by the driver and includes a stroke sensor which detects the amount of stroke of the brake pedal 100 and a foot pressure sensor which detects a foot pressure of the brake pedal 100.

A signal of the brake sensor 18 is inputted to the first and second braking force control apparatuses 4, 5 respectively and used to determine braking forces generated on the respective wheels, determine whether to start or stop the brake control system 1 or the like. As the brake sensor 18, a configuration combining a plurality of stroke sensors, foot pressure sensors or the like is preferable. In this way, since the braking force requested by the driver can be grasped more accurately, brake control feeling can be improved. Furthermore, even when a signal from one sensor is stopped, the driver's brake request can be recognized through the remaining sensors, and therefore fail safe is secured.

As described above, there is no significant difference between the first brake system 2 and the second brake system 3 of the brake control system 1 according to the first embodiment other than the difference in wheels whose braking force is controlled, and therefore a case with the first brake system 2 will be explained as an example and this will also serve as the explanation of the second brake system 3.

As shown in Fig. 1, the first power supply 6 is charged by a power generator (not shown), the charged power is supplied to the first valve drive circuit group 12 via the first and second power relays 8, 9 and also supplied to the other apparatus and equipment necessary to control braking forces. The first power supply 6 is a battery, capacitor, condenser or the like and can be provided with a charging/discharging circuit or the like to improve chargeability.

The first and second power relays 8, 9 supply or shut off electric power to the first valve drive circuit group 12 independently based on a control signal from the first braking force control apparatus 4 (Fig. 1 shows that the power relay is provided with a solenoid and a contact operated by the solenoid). The first and second power relays 8, 9 may be any one of a normally open relay and a normally closed relay, but when there is a fear that a dark current occurs downstream of the respective power relays 8, 9, they are preferably normally open relays. Furthermore, the first and second power relays 8, 9 may be any one of a mechanical relay and a semiconductor relay, but they are preferably semiconductor relays which are superior in the aspect of responsivity for power shutoff in case of emergency.

In the brake control system 1 according to the first embodiment, the first power relay 8 is connected to the first master shutoff valve drive circuit 21a, left front wheel pressure-reducing valve drive circuit 21c and right rear wheel pressure-increasing valve drive circuit 21d and supplies or shuts off electric power to these circuits. On the other hand, the second power relay 9 is connected to the left front wheel pressure-increasing valve drive circuit 21b and the right rear wheel pressure-reducing valve drive circuit 21e and supplies or shuts off electric power to these circuits.

The first hydraulic pressure unit 14 is provided with a pump 41 as a hydraulic pressure source which pressurizes and discharges the brake fluid supplied from the reservoir tank 17, a pump motor 42 which drives the pump 41, a first master shutoff valve 43a which shuts off the fluid channel 51 and a fluid channel 65, a left front wheel pressure-increasing valve 43b and a left front wheel pressure-reducing valve 43c which control increasing, retention or decreasing of the brake hydraulic pressure of the left front wheel brake caliper 19a, a right rear wheel pressure-increasing valve 43d and a right rear wheel pressure-reducing valve 43e which control increasing, retention or decreasing of the brake hydraulic pressure of the right rear wheel brake caliper 19b, a first master pressure sensor 44 which is provided for the fluid channel 51 to detect the hydraulic pressure of the master cylinder 16, a left front wheel hydraulic pressure sensor 46a which is provided for a fluid channel 66 to detect the brake hydraulic pressure of the left front wheel brake caliper 19a, a right rear wheel hydraulic pressure sensor 46b which is provided for a fluid channel 73 to detect the brake hydraulic pressure of the right rear wheel brake caliper 19b, check valves 47, a relief valve 48 which restrains the discharge pressure of the pump 41 from becoming excessive and fluid channels 61 to 74.

The pump 41 is a gear pump, plunger pump, trochoid pump or the like. Furthermore, the pump motor 42 is a DC motor, DC brushless motor, AC motor or the like. Furthermore, the check valve 47 tolerates the flow of the brake fluid which flows from the pump 41 side to the brake caliper 19 side and shuts off the flow of the brake fluid which flows from the brake caliper 19 side to the pump 41 side.

Furthermore, each hydraulic pressure control valve 43 is of an electromagnetic type where opening/closing of the valve is performed by power distribution to a solenoid inside (not shown), the first braking force control apparatus 4 controls a current flow into the solenoid through, for example, feedback control based on the detection value of the hydraulic pressure sensor 46 and thereby controls the opening/closing of the valve. Furthermore, each hydraulic pressure control valve 43 may be any one of a normally open valve and a normally closed valve, but in the case of the brake control system 1 according to the first embodiment, the left front wheel pressure-reducing valve 43c is a normally closed valve and all other hydraulic pressure control valves 43 are normally open valves.

When all the hydraulic pressure control valves 43 become deenergized by adopting such a valve configuration, it is also possible to generate braking force using the left front wheel. That is, when the valves become deenergized, the left front wheel pressure-reducing valve 43c is closed and all the other hydraulic pressure control valves 43 are opened, the hydraulic pressure of the master cylinder 16 according to the pedal operation quantity of the brake pedal 100 is maintained by the left front wheel pressure-reducing valve 43c and the check valve 47a and reaches the left front wheel brake caliper 19a, and therefore a braking force substantially proportional to the foot pressure on the brake pedal 100 is generated.

Furthermore, when all the hydraulic pressure control valves 43 become deenergized, adopting such a valve configuration allows the braking forces generated in the brake calipers 19a, 19b to be released. That is, when the valves are deenergized and all hydraulic pressure control valves 43 other than the left front wheel pressure-reducing valve 43c are opened, the brake fluid of the left front wheel brake caliper 19a returns to the reservoir tank 17 via the fluid channel 66, fluid channel 65, first master shutoff valve 43a, fluid channel 51 and master cylinder 16, and the brake fluid of the right rear wheel brake caliper 19b is returned to the reservoir tank 17 via the fluid channel 73, fluid channel 71, right rear wheel pressure-reducing valve 43e, fluid channel 72, fluid channel 74, fluid channel 67 and fluid channel 53, and the hydraulic pressure decreases, and therefore the braking force of each wheel becomes substantially zero when the driver does not operate the brake pedal 100. In this way, even when a malfunction (e.g., malfunction of the electric system) occurs in the middle of generation of the braking force, the braking force of the malfunctioning system is reliably released, and therefore stability of the vehicle is secured.

The first braking force control apparatus 4 is a calculation processing circuit and calculates the braking force requested by the driver based on signals from the brake sensor 18, first master pressure sensor 44 or the like, and controls the brake hydraulic pressures of the brake calipers 19a, 19b based on this. The first braking force control apparatus 4 is bidirectionally communicating with the second braking force control apparatus 5 and sends and receives braking force command values, malfunction information, vehicle information or the like.

The first braking force control apparatus 4 controls the first and second power relays 8, 9 (control modes will be described in detail later) and the first valve drive circuit group 12. The first braking force control apparatus 4 is started by a signal of the brake sensor 18, a signal of an ignition switch 101 or the like. It is possible to input signals of a door sensor, seating sensor, parking brake or the like to the first braking force control apparatus 4 and allow these signals to start the first braking force control apparatus 4. This causes the brake control system 1 to start before the driver operates the brake pedal 100 or the ignition switch 101, and can thereby generate a more stable braking force.

Furthermore, it is also possible to input a vehicle speed, wheel speed, forward/backward acceleration of the vehicle to the first braking force control apparatus 4, lateral acceleration of the vehicle, yaw rate of the vehicle or the like, determine the distribution of the braking force based on them and automatically generate a braking force. This allows the braking force of each wheel to be appropriately controlled according to the driving condition and behavior of the vehicle, and thereby improves stability of the vehicle during steering or when driving on a low-friction road and can shorten the stopping distance.

The brake caliper 19 is constructed of a cylinder, piston, pad (not shown) or the like, the piston is driven by a brake fluid supplied from each hydraulic pressure unit 14, 15 and the pad linked to the piston is pushed against a disk rotor 102. The disk rotor 102 is rotating together with the wheel (not shown). Therefore, the braking torque which acts on the disk rotor 102 becomes the braking force which acts between the wheel and the road. Any two or more of the first braking force control apparatus 4, first, second power relays 8, 9, first valve drive circuit group 12 and first hydraulic pressure unit 14 can be united in the same housing. This allows each power line, signal line, hydraulic pressure pipe or the like to be incorporated in the housing and improves the reliability of the brake control system 1.

Here, the operation of the first brake system 2 will be explained. When the brake control system 1 is started by the driver's operation of the brake pedal 100 or the ignition switch 101, the first braking force control apparatus 4 closes the contacts of the first and second power relays 8, 9 after an initial diagnosis or the like. This allows power to be supplied to the first valve drive circuit group 12 and allows control over each hydraulic pressure control valve 43.

Hereinafter, various braking force control conditions, or more specifically, operations of the first braking force control apparatus 4 during no control, during increase control, during retention control and during decrease control will be explained. First, during no control, since no power is distributed to any of the hydraulic pressure control valves 43, the left front wheel pressure-reducing valve 43c is closed and all other hydraulic pressure control valves 43 are open. Furthermore, since the pump motor 42 is stopped, the brake hydraulic pressure of the fluid channel 61 is substantially atmospheric pressure and the braking force of each wheel is substantially zero.

Next, when the control condition is shifted from no control to increase control, the first braking force control apparatus 4 closes the first master shutoff valve 43a, left front wheel pressure-reducing valve 43c and right rear wheel pressure-reducing valve 43e. The pump motor 42 then drives the pump 41, increases the pressure of the brake fluid in the reservoir tank 17 to a fixed pressure. The brake fluid pressurized by the pump 41 passes through the check valve 47a, left front wheel pressure-increasing valve 43b and reaches the left front wheel brake caliper 19a and a braking force is thereby generated on the left front wheel. In the same way, the brake fluid pressurized by the pump 41 passes through the check valve 47b and the right rear wheel pressure-increasing valve 43d, reaches the right rear wheel brake caliper 19b and a braking force is thereby generated on the right rear wheel. When the hydraulic pressure detected by the left front wheel hydraulic pressure sensor 46a reaches a predetermined value, the left front wheel pressure-increasing valve 43b is closed. In the same way, when the hydraulic pressure detected by the right rear wheel hydraulic pressure sensor 46b reaches a predetermined value, the right rear wheel pressure-increasing valve 43d is closed. The driving of the pump 41 by the pump motor 42 is then stopped.

During increase control, adjusting the amount of closing and closing timing of the left front wheel pressure-increasing valve 43b and the right rear wheel pressure-increasing valve 43d allows the brake hydraulic pressures of the left front wheel brake caliper 19a and the right rear wheel brake caliper 19b to be controlled to different values. This allows the ratio of the braking forces generated on the left front wheel and the right rear wheel to be arbitrarily changed and thereby allows the braking force to be distributed between the front wheel and the rear wheel without using any proportioning valve or the like. Furthermore, when regenerative braking is realized with a hybrid car, electric car or the like, since the braking force distributed by the brake control system 1 can be arbitrarily controlled according to the magnitude of the regenerative braking force, the braking force requested by the driver is secured and energy can be collected through regeneration. This improves the stability of the vehicle and shortens the stopping distance. Furthermore, regenerative braking also improves fuel consumption performance and restrains an exhaust gas of the vehicle.

Next, when the control condition shifts from increase control to retention control, the first braking force control apparatus 4 continues to close the left front wheel pressure-increasing valve 43b and right rear wheel pressure-increasing valve 43d and continues to keep the brake hydraulic pressures of the brake calipers 19a, 19b to substantially fixed values. When the driver increases the foot pressure on the brake pedal 100 or the like in this condition, it is possible to open the left front wheel pressure-increasing valve 43b and the right rear wheel pressure-increasing valve 43d according to the requested braking force and drive the pump 41 to increase the brake hydraulic pressure. Next, when the control condition shifts from retention control to decrease control, the first braking force control apparatus 4 opens the left front wheel pressure-reducing valve 43c and right rear wheel pressure-reducing valve 43e and decreases the brake hydraulic pressures of the brake calipers 19a, 19b. This causes the braking force of each wheel to become substantially zero.

Since increase, retention and decrease of braking force of each wheel are continuously controlled through the above described series of operations, a stable braking force meeting the driver's request is secured. Furthermore, since the braking force is automatically controlled according to the driving condition and the behavior of the vehicle, the stability of the vehicle improves. When the control condition shifts from decrease control to no control, the first master shutoff valve 43a can be continuously kept closed for a predetermined time in preparation for the next braking force control. This causes the number of times the first master shutoff valve 43a is opened/closed to decrease, thereby suppresses power consumption necessary to drive the valve and improves the fuel consumption performance of the vehicle.

Here, the valve drive circuit 21 will be explained. Fig. 2 is a diagram showing the configuration of the valve drive circuit 21. In Fig. 2, broken lines with an arrow denote signal lines and the direction of the arrow indicates the flow of a signal. As shown in Fig. 2, the valve drive circuit 21 is provided with a shunt resistor 22, a current detection circuit 23 which detects the amount of current of a solenoid (not shown) in the hydraulic pressure control valve 43 based on a potential difference of the shunt resistor 22, a flywheel diode 24 which prevents an overvoltage of a drive element 26, a voltage detection circuit 25 which detects a voltage downstream of the solenoid and the drive element 26 which controls the amount of current of the solenoid.

The first braking force control apparatus 4 turns ON/OFF the drive element 26 based on the current value inputted from the current detection circuit 23 and the amount of current determined from the necessary amount of valve opening or the like and controls the amount of current of the solenoid. The amount of valve opening of each hydraulic pressure control valve 43 is controlled in this way and the hydraulic pressures of the brake calipers 19a, 19b are controlled to the requested values.

The first braking force control apparatus 4 can detect malfunctions of the power relay 8, valve drive circuit 21, hydraulic pressure control valve 43 or the like based on a current value inputted from the current detection circuit 23, a voltage value inputted from the voltage detection circuit 25, a drive signal of the power relay 8, a drive signal of the drive element 26 or the like. This makes it possible to identify and remove malfunctioning parts, perform control using only normal parts, thereby improve stability of the vehicle and shorten the stopping distance. With regard to the voltage detection circuit 25, since it is not directly used to control the amount of current of the solenoid, when a malfunction of voltage detection circuit 25 can be identified, it is possible to perform braking force control equivalent to that during normal operation.

Here, an example of corrective actions taken for malfunctions of the brake control system 1 according to the first embodiment will be explained. Fig. 3 is a diagram showing the relationship between a malfunction mode, corrective actions taken for a malfunction and braking force of each wheel. A O mark in the braking force of each wheel after a corrective action means a state in which the brake fluid pressurized by the pump 41 has reached the brake caliper 19, that is, that a normal braking force (hereinafter, referred to as a "servo brake") is secured. Furthermore, a Δ mark means a state in which the brake fluid pressurized by the master cylinder 16 has reached the brake caliper 19 by the driver's foot pressure on the brake pedal 100, that is, that the braking force (hereinafter referred to as "foot pressure brake") substantially proportional to the foot pressure is secured. Furthermore, a x mark means that no braking force acts.

Furthermore, since Fig. 3 is only targeted at malfunctions of the first brake system 2, both the braking forces of the right front wheel and the left rear wheel controlled by the second brake system 3 are servo brakes (however, on the assumption that the second brake system 3 is not out of order).

As an example, a corrective action to be taken for an OFF fixed malfunction of the first power relay 8 shown in case 1 will be explained. When this malfunction occurs, the left front wheel pressure-reducing valve 43c is closed and the first master shutoff valve 43a and the right rear wheel pressure-increasing valve 43d are opened. When the control of the braking force is continued in this condition, since the brake fluid discharged from the pump 41 flows into the reservoir tank 17 via the check valve 47a, left front wheel pressure-increasing valve 43b, first master shutoff valve 43a and master cylinder 16, it is difficult for both the left front wheel and right rear wheel brake calipers 19a, 19b to boost the pressure of the brake fluid and it is impossible to secure the servo brake (it is difficult for the pump 41 to boost the pressure on the brake caliper 19b because the pump 41 communicates with the reservoir tank 17 as described above).

Therefore, the first braking force control apparatus 4 applies a corrective action of closing the left front wheel pressure-increasing valve 43b to this malfunction (as described above in the explanation of Fig. 2, the first braking force control apparatus 4 can detect a malfunction of the power relay). Since this causes the brake fluid pressurized by the pump 41 to reach the right rear wheel brake caliper 19b via the check valve 47b and the right rear wheel pressure-increasing valve 43d, it is possible to generate a servo brake on the right rear wheel. Furthermore, since the hydraulic pressure of the master cylinder 16 is retained by the left front wheel pressure-reducing valve 43c and the left front wheel pressure-increasing valve 43b and reaches the left front wheel brake caliper 19a, a foot pressure brake is generated on the left front wheel. Since this secures the servo brakes of three wheels (e.g., right rear wheel, left rear wheel, right front wheel) and the foot pressure brake of one wheel (e.g., left front wheel), it is possible to safely stop the vehicle.

An OFF fixed malfunction of the first power relay 8 has been explained so far as an example, but it is also possible take appropriate corrective actions for other malfunctions and thereby limit influences of the malfunctions to a minimum. As a result, as shown in Fig. 3, servo brakes of at least three wheels or servo brakes of all four wheels are secured depending on the malfunction mode (see cases 6, 8), and therefore it is possible to safely stop the vehicle. The corrective actions taken for the malfunctions in Fig. 3 are only examples, and the contents of the corrective actions can be optimally determined as appropriate according to specific situations of the malfunction mode, influences of secondary malfunctions when control is continued or the like.

Furthermore, in cases 1 to 5, 7 and 9, stable braking forces meeting the driver's request can be secured even in case of malfunction by increasing the braking forces of the three wheels for which a servo brake is secured. Furthermore, the malfunction modes of cases 5 to 9 include malfunction modes which constitute causes thereof such as wire breakage of the shunt resistor 22, wire breakage of the solenoid, OFF fixation of the drive element 26, short circuit of the flywheel diode 24. Furthermore, as for cases 6, 8, since the opening conditions of the left front wheel pressure-increasing valve 43b and right rear wheel pressure-increasing valve 43d are retained, the brake hydraulic pressures of the left front wheel and right rear wheel brake calipers 19a, 19b are controlled to substantially the same pressure.

Furthermore, when the first power supply 6 fails to operate properly, power distribution to all the hydraulic pressure control valves 43 is stopped, the left front wheel pressure-reducing control valve 43c is closed and all the other hydraulic pressure control valves 43 are opened, and therefore the servo brakes cannot be secured on both the left front and right rear wheels. However, in this case, too, the hydraulic pressure of the master cylinder 16 according to the pedal operation quantity of the brake pedal 100 is retained by the left front wheel pressure-reducing valve 43c and check valve 47a and reaches the left front wheel brake caliper 19a, and it is thereby possible to secure the foot pressure brake on the left front wheel.

Here, grouping of the valve drive circuits 21 in the brake control system 1 of the present invention will be explained. When all the hydraulic pressure control valves 43 provided for one cycle of fluid channels communicating from the pump 41 as a hydraulic pressure source to the reservoir tank 17 as a reservoir are valves which operate so that the pump 41 communicates with the reservoir tank 17 when the valve drive circuit is deenergized, that is, normally open valves, a feature of the brake control system 1 according to this embodiment is that different power relays are used as the power shutoff means located upstream of these valves for at least two of the valve drive circuits 21 which control these valves. The case where the first power relay 8 and the second power relay 9 are arranged separate from each other has been described as an example here, but power supplies provided with a fuse instead of the power relays may be arranged separate from each other.

This is intended to prevent the braking forces of all wheels under control from malfunctioning due to a malfunction of one power relay or the like especially when one pump 41 controls braking forces of a plurality of wheels. When all the hydraulic pressure control valves 43 provided for one cycle of fluid channels are normally open valves and these power relays are common, if one power relay fails to operate properly while being fixed to "OFF", power distribution to all the hydraulic pressure control valves 43 located downstream of the power relay stops and the pump 41 communicates with the reservoir tank 17. This causes the brake fluid pressurized by the pump 41 to flow into the reservoir tank 17 via the one cycle of communicating fluid channels, making it difficult for the brake calipers 19a, 19b of all the wheels to boost the pressure of the brake fluid and making it impossible to secure the servo brake. To avoid such a situation, the brake control system 1 of this embodiment adopts the configuration having the above described feature.

According to the above described feature, the first hydraulic pressure unit 14 of the first embodiment includes two sets of valve drive circuits 21 whose power relays need to be separated from each other. One set is composed of the valve drive circuits 21a and 21b which control the left front wheel pressure-increasing valve 43b and the first master shutoff valve 43a respectively provided for one cycle of fluid channels communicating from the pump 41 to the reservoir tank 17 via the fluid channel 61, fluid channel 62, fluid channel 63, fluid channel 64, fluid channel 65, fluid channel 51 and master cylinder 16. According to the above described feature, the valve drive circuits 21b and 21a need to be provided with power relays which are separate from each other and suppose this is a first constraint.

The other set is composed of the valve drive circuits 21d and 21e which control the right rear wheel pressure-increasing valve 43d and the right rear wheel pressure-reducing valve 43e respectively provided for one cycle of fluid channels communicating from the pump 41 to the reservoir tank 17 via the fluid channel 61, fluid channel 68, fluid channel 69, fluid channel 70, fluid channel 71, fluid channel 72, fluid channel 74, fluid channel 67 and fluid channel 53. According to the above described feature, the valve drive circuits 21d and 21e need to be provided with power relays which are separate from each other and suppose this is a second constraint.

Fig. 4 is a diagram showing an example of grouping of the valve drive circuits 21 based on the first and second constraints. A, B, C and D in Fig. 4 are group names defined for the sake of convenience and mean that a power relay is common to the valve drive circuits 21 which belong to the same group. That is, each configuration is provided with the same number of power relays as the group names.

There are two other constraints on the grouping shown in Fig. 4; one regarding the first master shutoff valve drive circuit 21a and the left front wheel pressure-reducing valve drive circuit 21c as the same group and the other regarding the first master shutoff valve drive circuit 21a and the right rear wheel pressure-reducing valve drive circuit 21e as belonging to different groups, and hereinafter the first will be referred to as a third constraint and the latter as a fourth constraint. However, since the third constraint is not indispensable, it is also possible to adopt a configuration in which the first master shutoff valve drive circuit 21a and the left front wheel pressure-reducing valve drive circuit 21c are classified into different groups.

Here, the reason that the third and fourth constraints are provided will be explained. First, the third constraint will be explained.

In the brake control system 1 according to the first embodiment, since the left front wheel pressure-reducing valve 43c is a normally closed valve, when power distribution is stopped due to a malfunction of the valve drive circuit 21c or the like, the left front wheel pressure-reducing valve 43c is closed. As a result, the brake hydraulic pressure of the left front wheel cannot be decreased (because there is no more connection with the reservoir tank 17 due to closing of the left front wheel pressure-reducing valve 43c) and it is not possible to change over from retention control to decrease control. To avoid such a situation, it is necessary to open the first master shutoff valve 43a so as to enable the brake fluid to flow from the left front wheel brake caliper 19a toward the master cylinder 16 and stopping power distribution to the first master shutoff valve drive circuit 21a can be thought of as one method for realizing this. In this way, since the first master shutoff valve drive circuit 21a can be said to be allowed to become deenergized simultaneously with the left front wheel pressure-reducing valve drive circuit 21c, a common power relay can be used for these circuits.

On the other hand, since the first master shutoff valve 43a is a normally open valve, the first master shutoff valve 43a is opened when power distribution is stopped due to a malfunction of the valve drive circuit 21a or the like. As a result, the servo brake of the left front wheel which is realized by shutting off the pump 41 and master cylinder 16 using the first master shutoff valve 43a is no longer secured. In such a case, the left front wheel pressure-reducing valve 43c must be closed so that the foot pressure brake can be secured on the left front wheel and stopping power distribution to the left front wheel pressure-reducing valve drive circuit 21c is thought of as one method for realizing this. In this way, since the left front wheel pressure-reducing valve drive circuit 21c can be said to be allowed to become deenergized simultaneously with the first master shutoff valve drive circuit 21a, a common power relay can be used for these circuits.

That is, for those of the plurality of hydraulic pressure control valves 43 (e.g., 43a and 43c) located closest to the reservoir tank 17 in one cycle of fluid channels communicating from the pump 41 as a hydraulic pressure source to the reservoir tank 17 as a reservoir used to control the same brake caliper 19 (e.g., caliper 19a), a common power relay (e.g., power relay 8) may be used as the power shutoff means located upstream of the valve drive circuits 21 (e.g., 21a and 21c) which control these valves (e.g., 43a and 43c) (that is, the third constraint is not always indispensable). This is the reason that the third constraint is provided and when such grouping is used in consideration of this, it is possible to reduce the number of power relays and thereby reduce the size and weight of the brake control system 1.

Next, the fourth constraint will be explained. In the brake control system 1 according to the first embodiment, since both the first master shutoff valve 43a and the right rear wheel pressure-reducing valve 43e are normally open valves, when power distribution to these valve drive circuits 21a and 21e are simultaneously stopped, both valves are opened. As a result, since the brake fluid pressurized by the pump 41 passes through the first master shutoff valve 43a and flows into the reservoir tank 17, it is difficult for the left front wheel brake caliper 19a to boost the pressure of the brake fluid, making it impossible to secure the servo brake on the left front wheel. In the same way, since the brake fluid pressurized by the pump 41 passes through the right rear wheel pressure-reducing valve 43e and flows into the reservoir tank 17, it is difficult for the right rear wheel brake caliper 19b to boost the pressure of the brake fluid, making it impossible to secure the servo brake on the right rear wheel. That is, the braking forces on all the wheels distributed by the first hydraulic pressure unit 14 malfunction.

To avoid such a situation, for those of the plurality of hydraulic pressure control valves 43 located closest to the reservoir tank 17 in each cycle of fluid channels communicating from the pump 41 as a hydraulic pressure source to the reservoir tank 17 as a reservoir used to control different brake calipers 19 (e.g., calipers 19a and 19b), different power relays (e.g., power relays 8 and 9) may be used as the power shutoff means located upstream of the valve drive circuit 21 which controls these valves. This is the reason that the fourth constraint is provided and when such grouping is used in consideration of this, it is possible to reduce the number of wheels whose brake forces malfunction and thereby secure the stable braking force meeting the driver's request even in the event of malfunction.

The brake control system 1 shown in Fig. 1 shows the configuration 1 in Fig. 4, but other configurations may also be naturally adopted in the first embodiment. As described above, the brake control system 1 according to the first embodiment of the present invention can generate a necessary and sufficient braking force on a predetermined wheel by preventing one malfunction (one malfunction that disables operation of the valve) from affecting control of the brake hydraulic pressure of a plurality of brake calipers 19 and can thereby safely stop the vehicle.

### [Second embodiment]

Next, a brake control system according to a second embodiment of the present invention will be explained with reference to Fig. 5 and Fig. 6. Fig. 5 is a diagram showing the overall configuration of the brake control system 1 according to the second embodiment. The same parts as those in the first embodiment are assigned the same reference numerals and explanations thereof will be omitted.

What the second embodiment is different from the first embodiment is that it is not provided with the second braking force control apparatus 5, second valve drive circuit group 13 and second hydraulic pressure unit 15, that it is provided with third and fourth braking force control apparatuses 91, 92 and that a first brake system 2 assumes the control of the left front wheel and the right front wheel.

Furthermore, differences include that a first valve drive circuit group 12 includes a first master shutoff valve drive circuit 21a, a left front wheel pressure-increasing valve drive circuit 21b and a left front wheel pressure-reducing valve drive circuit 21c, a second master shutoff valve drive circuit 31a, a right front wheel pressure-increasing valve drive circuit 31b and a right front wheel pressure-reducing valve drive circuit 31c.

Furthermore, differences include that as the first brake system 2 assumes the control of the right front wheel instead of the right rear wheel, the right rear wheel pressure-increasing valve 43d, right rear wheel pressure-reducing valve 43e and right rear wheel hydraulic pressure sensor 46b in the first hydraulic pressure unit 14 shown in Fig. 1 are replaced by a right front wheel pressure-increasing valve 49b, a right front wheel pressure-reducing valve 49c and a right front wheel hydraulic pressure sensor 46c respectively and that the system is provided with a second master shutoff valve 49a and a second master pressure sensor 45.

As shown in Fig. 5, each pressurization chamber of a master cylinder 16 is connected to a first hydraulic pressure unit 14 through fluid channels 51, 52 and brake fluids pressurized by the master cylinder 16 are designed to reach left front wheel and right front wheel brake calipers 19a, 19c. This makes it possible to generate foot pressure brakes on the left front wheel and the right front wheel as in the case of the first embodiment. The hydraulic pressure control valves 43, 49 may be any one of normally open valves and normally closed valves, but in the brake control system according to the second embodiment, all the left front wheel pressure-reducing valve 43c and right front wheel pressure-reducing valve 49c are normally closed valves and all other hydraulic pressure control valves 43 and 49 are normally open valves. By adopting such a valve configuration, even when all the hydraulic pressure control valves 43, 49 become deenergized, it is also possible to generate the foot pressure braking force on the left front wheel and the right front wheel as in the case of the first embodiment. Furthermore, by adopting such a valve configuration, even when all the hydraulic pressure control valves 43, 49 become deenergized as in the case of the first implementation, the braking forces generated at the brake calipers 19a and 19 can be released.

The third and fourth braking force control apparatuses 91, 92 are calculation processing circuits, calculate braking forces requested by the driver based on signals from a brake sensor 18, first and second master pressure sensors 44, 45 or the like and control the braking forces of the brake calipers 19b, 19d based on this. The third and fourth braking force control apparatuses 91, 92 are communicating with each other and bidirectionally communicating with the first braking force control apparatus 4 and send and receive braking force command values, malfunction information, vehicle information or the like.

The third and fourth braking force control apparatuses 91, 92 control third and fourth power relays 10, 11. The third and fourth braking force control apparatuses 91, 92 supply three-phase power to left rear wheel and right rear wheel brake calipers 19b, 19d and receive information necessary to control braking forces from the brake calipers 19b, 19d.

The left rear wheel and right rear wheel brake calipers 19b, 19d are electric brake calipers composed of, for example, a piston, a pad, a motor, a conversion mechanism which converts the rotational torque of the motor to thrust of the piston or the like, the motor is driven to rotate with three-phase power supplied from the third and fourth braking force control apparatuses 91, 92, the rotational torque generated is converted to thrust by the conversion mechanism, the piston is driven by the thrust and the pad connected to the piston is pushed against a disk rotor 102.

As described above, the brake control system 1 according to the second embodiment of the present invention has no significant difference from the first embodiment except that the braking forces of the left rear wheel and the right rear wheel are controlled with three-phase power, increase, retention and decrease of the braking force of each wheel are controlled continuously as in the case of the first embodiment, and therefore a stable braking force meeting the driver's request can be secured. The brake control system 1 according to the second embodiment controls the braking forces of the left rear wheel and the right rear wheel with the rotational torque of the motor, and thereby excels the brake control system 1 according to the first embodiment in controllability, responsivity or the like.

Furthermore, since the left rear wheel and right rear wheel brake calipers 19b, 19d are, for example, electric brake calipers, a brake pipe (not shown) and the brake fluid can be reduced compared to the brake control system 1 according to the first embodiment. Furthermore, since the left rear wheel and right rear wheel brake calipers 19b, 19d can also be used for the parking brake, the number of parts can be reduced, the weight of the vehicle can be thereby reduced and fuel consumption performance improves. Furthermore, the third braking force control apparatus 91 can be united with the left rear wheel brake caliper 19d and the fourth braking force control apparatus 92 can be united with the right rear wheel brake caliper 19b. This allows the power lines and signal lines provided therebetween to be incorporated in the respective brake calipers 19b, 19d, and therefore the reliability improves and the mountability of the brake calipers 19b and 19d improves.

Here, grouping of the valve drive circuits 21, 31 in the first hydraulic pressure unit 14 of the present invention will be explained. As described above, when all hydraulic pressure control valves 43, 49 provided for one cycle of fluid channels communicating from a pump 41 as a hydraulic pressure source to a reservoir tank 17 as a reservoir are valves which operate so as to communicate the pump 41 and the reservoir tank 17 when deenergized, that is, normally open valves, a feature of the brake control system 1 according to the second embodiment is that for at least two of the valve drive circuits 21, 31 which control these valves, different power relays are used as the power shutoff means located upstream of these valves (at least two valve drive circuits).

According to this feature, two sets of the valve drive circuits 21, 31 whose power relays should be separated from each other exist in the first hydraulic pressure unit 14 of the second embodiment. One set is composed of valve drive circuits 21a and 21b which control the left front wheel pressure-increasing valve 43b and the first master shutoff valve 43a provided for one cycle of fluid channels communicating from the pump 41 to the reservoir tank 17 via the fluid channel 61, fluid channel 62, fluid channel 63, fluid channel 64, fluid channel 65, fluid channel 51 and master cylinder 16. According to the above described feature, power relays 8, 9 need to be separated from each other and suppose this is a first constraint (21a corresponds to the power relay 8 and 21b corresponds to the power relay 9 and the two are separated from each other).

The other set is composed of the valve drive circuits 31a and 31b which control the right rear wheel pressure-increasing valve 49b and the second master shutoff valve 49a provided for one cycle of fluid channels communicating from the pump 41 to the reservoir tank 17 via the fluid channel 61, fluid channel 68, fluid channel 69, fluid channel 70, fluid channel 75, fluid channel 52 and master cylinder 16. According to the above described feature, different power relays need to be provided for these valve drive circuits and suppose this is a second constraint.

Fig. 6 is a diagram showing an example of grouping of the valve drive circuits 21, 31 based on the first and second constraints. A, B, C and D in Fig. 6 are group names defined for convenience' sake and mean that a power relay is common to the valve drive circuits 21, 31 which belong to the same group. That is, each configuration is provided with the same number of power relays as the group names.

There are two other constraints on the grouping shown in Fig. 6; one regarding the first master shutoff valve drive circuit 21a and the left front wheel pressure-reducing valve drive circuit 21c as the same group and the other regarding the second master shutoff valve drive circuit 31a and the right front wheel pressure-reducing valve drive circuit 31c as the same group and hereinafter these will be referred to as a third constraint.

Furthermore, as in the case of the fourth constraint in the first embodiment, there are other constraints; regarding the first master shutoff valve drive circuit 21a as belonging to a group different from that of the second master shutoff valve drive circuit 31a and the right front wheel pressure-reducing valve drive circuit 31c, regarding the left front wheel pressure-reducing valve drive circuit 21c as belonging to a group different from that of the second master shutoff valve drive circuit 31a and the right front wheel pressure-reducing valve drive circuit 31c, regarding the second master shutoff valve drive circuit 31a as belonging to a group different from that of the first master shutoff valve drive circuit 21a and the left front wheel pressure-reducing valve drive circuit 21c, and regarding the right front wheel pressure-reducing valve drive circuit 31c as belonging to a group different from that of the first master shutoff valve drive circuit 21a and the left front wheel pressure-reducing valve drive circuit 21c, and hereinafter these will be considered as a fourth constraint. However, since the third constraint is not indispensable, it is also possible to adopt a configuration in which the first master shutoff valve drive circuit 21a and left front wheel pressure-reducing valve drive circuit 21c, second master shutoff valve drive circuit 31a and right front wheel pressure-reducing valve drive circuit 31c are regarded as belonging to different groups.

The brake control system 1 shown in Fig. 5 shows the configuration 1 in Fig. 6, but the second embodiment can naturally adopt another configuration. As described above, the brake control system 1 according to the second embodiment of the present invention prevents one malfunction from affecting brake hydraulic pressure control of a plurality of brake calipers 19, can generate necessary and sufficient braking forces on predetermined wheels, and can thereby safely stop the vehicle.

### [Third embodiment]

Next, the brake control system according to a third embodiment of the present invention will be explained with reference to Fig. 7 and Fig. 8. Fig. 7 is a diagram showing the overall configuration of a brake control system 1 according to the third embodiment of the present invention. The same parts as those in the first embodiment are assigned the same reference numerals and explanations thereof will be omitted. Furthermore, as in the case of the first embodiment, since a second hydraulic pressure unit 15 has the same configuration as that of a first hydraulic pressure unit 14, illustrations and explanations of the configuration will be omitted.

What the third embodiment is different from the first embodiment is that the reservoir tank 17 and the first and second hydraulic pressure units 14, 15 are commonly connected through a fluid channel 53, that the first and second hydraulic pressure units 14, 15 are provided with neither pump nor pump motor, that an independent set of a pump 41 and a pump motor 42 is provided, that the first and second hydraulic pressure units 14, 15 are provided with neither check valve nor relief valve and that an independent relief valve 48 is provided. The first hydraulic pressure unit 14, second hydraulic pressure unit 15, pump 41 and pump motor 42 can be united in the same housing. This allows each hydraulic pressure pipe arranged therebetween to be incorporated in the housing and the reliability of the brake control system 1 thereby improves.

In Fig. 7, the brake fluid pressurized with the pump 41 is supplied to the first and second hydraulic pressure units 14, 15 via a fluid channel 61, a fluid channel 76 and a fluid channel 82. As in the case of the first embodiment, since increase, retention, decrease of the braking force of each wheel are continuously controlled, a stable braking force meeting the driver's request is secured. Each hydraulic pressure control valve 43 may be any one of a normally open valve and a normally closed valve, but in the brake control system 1 according to the third embodiment, a first master shutoff valve 43a and a right rear wheel pressure-reducing valve 43e are normally open valves and all other hydraulic pressure control valves 43 are normally closed valves. Even when all the hydraulic pressure control valves 43 become deenergized, adopting such a valve configuration allows a foot pressure braking force to be generated on the left front wheel as in the case of the first embodiment. Furthermore, even when all the hydraulic pressure control valves 43 are deenergized, adopting such a valve configuration allows braking forces generated at the respective brake calipers 19a, 19b to be released as in the case of the first embodiment.

Here, grouping of valve drive circuits 21 in the brake control system 1 according to the third embodiment will be explained. The brake control system 1 according to the third embodiment has a feature that when the hydraulic pressure control valve 43 located closest to the pump 41 in one cycle of fluid channels communicating from the pump 41 as a hydraulic pressure source to the reservoir tank 17 as a reservoir is a valve which operates so as to shut off the pump 41 and the reservoir tank 17 when deenergized, that is, a normally closed valve, for the valve drive circuits 21 that control all the hydraulic pressure control valves 43 provided for one cycle of fluid channels, a common power relay located upstream of all these valves is used as the power shutoff means.

According to this feature, the first hydraulic pressure unit 14 of the third embodiment includes three sets of valve drive circuits 21 for which a common power relay can be used. One set is composed of valve drive circuits 21a, 21b which control a left front wheel pressure-increasing valve 43b and a first master shutoff valve 43a provided for one cycle of fluid channels communicating from the pump 41 to the reservoir tank 17 via a fluid channel 61, a fluid channel 76, a fluid channel 62, a fluid channel 64, a fluid channel 65, a fluid channel 51 and a master cylinder 16. According to this feature, a common power relay can be used for these circuits and suppose this is a fifth constraint.

Another set is composed of valve drive circuits 21b, 21c which control the left front wheel pressure-increasing valve 43b and a left front wheel pressure-reducing valve 43c provided for one cycle of fluid channels communicating from the pump 41 to the reservoir tank 17 via the fluid channel 61, the fluid channel 76, the fluid channel 62, the fluid channel 64, a fluid channel 77, a fluid channel 78, a fluid channel 80, a fluid channel 81 and the fluid channel 53. According to the above described feature, a common power relay can be used for these circuits and suppose this is a sixth constraint.

The other set is composed of valve drive circuits 21d, 21e which control a right rear wheel pressure-increasing valve 43d and the right rear wheel pressure-reducing valve 43e provided for one cycle of fluid channels communicating from the pump 41 to the reservoir tank 17 via the fluid channel 61, the fluid channel 76, a fluid channel 68, a fluid channel 70, a fluid channel 71, a fluid channel 79, the fluid channel 80, the fluid channel 81 and the fluid channel 53. According to the above described feature, a common power relay can be used for these circuits and suppose this is a seventh constraint.

Here, the reason that the fifth to seventh constraints are provided will be explained. First, the set of the left front wheel pressure-increasing valve 43b and the first master shutoff valve 43a will be considered. Since the left front wheel pressure-increasing valve 43b is a normally closed valve, when power distribution is stopped due to a malfunction of the valve drive circuit 21b or the like, the left front wheel pressure-increasing valve 43b is closed. As a result, it is difficult for a left front wheel brake caliper 19a located downstream thereof to boost the pressure of the brake fluid and it is impossible to secure the servo brake of the left front wheel. In such a case, the first master shutoff valve 43a needs to be opened so that the foot pressure brake can be secured on the left front wheel and stopping power distribution to the first master shutoff valve drive circuit 21a may be thought of as one method for realizing this. In this way, since the first master shutoff valve drive circuit 21a can be said to be allowed to become deenergized simultaneously with the left front wheel pressure-increasing valve drive circuit 21b, a common power relay can be used for these circuits.

On the other hand, since the first master shutoff valve 43a is a normally open valve, the first master shutoff valve 43a is opened when power distribution is stopped due to a malfunction of the valve drive circuit 21a or the like. As a result, the servo brake on the left front wheel which is realized by shutting off the pump 41 and the master cylinder 16 using the first master shutoff valve 43a is no longer secured. In such a case, the left front wheel pressure-increasing valve 43b must be closed so that the foot pressure brake can be secured on the left front wheel and stopping power distribution to the left front wheel pressure-increasing valve drive circuit 21b is thought of as one method for realizing this. In this way, since the left front wheel pressure-increasing valve drive circuit 21b can be said to be allowed to become deenergized simultaneously with the first master shutoff valve drive circuit 21a, a common power relay can be used for these circuits (e.g., valve drive circuits 21a and 21b).

Next, the set of the left front wheel pressure-increasing valve 43b and the left front wheel pressure-reducing valve 43c will be considered. Since the left front wheel pressure-increasing valve 43b is a normally closed valve, when power distribution is stopped due to a malfunction of the valve drive circuit 21b or the like, the left front wheel pressure-increasing valve 43b is closed. As a result, it is difficult for the left front wheel brake caliper 19a located downstream thereof to boost the pressure of the brake fluid and it is impossible to secure the servo brake on the left front wheel. In such a case, the left front wheel pressure-reducing valve 43c needs to be closed so that the foot pressure brake can be secured on the left front wheel and stopping power distribution to the left front wheel pressure-reducing valve drive circuit 21c may be thought of as one method for realizing this. In this way, since the left front wheel pressure-reducing valve drive circuit 21c can be said to be allowed to become deenergized simultaneously with the left front wheel pressure-increasing valve drive circuit 21b, a common power relay can be used for these circuits (e.g., valve drive circuits 21b and 21c).

On the other hand, since the left front wheel pressure-reducing valve 43c is a normally closed valve, when power distribution is stopped due to a malfunction of the valve drive circuit 21c or the like, the left front wheel pressure-reducing valve 43c is closed. In such a case, the left front wheel pressure-increasing valve 43b must be closed so as to prevent the brake fluid pressurized by the pump 41 from flowing into the left front wheel brake caliper 19a and stopping power distribution to the left front wheel pressure-increasing valve drive circuit 21b is thought of as one method for realizing this. In this way, since the left front wheel pressure-increasing valve drive circuit 21b can be said to be allowed to become deenergized simultaneously with the left front wheel pressure-reducing valve drive circuit 21c, a common power relay can be used for these circuits (e.g., valve drive circuits 21b and 21c).

Next, the set of the right rear wheel pressure-increasing valve 43d and the right rear wheel pressure-reducing valve 43e will be considered. Since the right rear wheel pressure-increasing valve 43d is a normally closed valve, if power distribution is stopped due to a malfunction of the valve drive circuit 21d or the like, the right rear wheel pressure-increasing valve 43d is closed. As a result, it is difficult for the right rear wheel brake caliper 19b located downstream thereof to boost the pressure of the brake fluid and it is no longer possible to secure the servo brake on the right rear wheel. In such a case, the right rear wheel pressure-reducing valve needs to be opened so that the brake force on the right rear wheel is released and stopping power distribution to the right rear wheel pressure-reducing valve drive circuit 21e can be thought of as a method for realizing this. In this way, the right rear wheel pressure-reducing valve drive circuit 21e can be said to be allowed to become deenergized simultaneously with the right rear wheel pressure-increasing valve drive circuit 21d, a common power relay can be used for these circuits (e.g., valve drive circuits 21d and 21e).

On the other hand, since the right rear wheel pressure-reducing valve 43e is a normally open valve, if power distribution is stopped due to a malfunction of the valve drive circuit 21e or the like, the right rear wheel pressure-reducing valve 43e is opened. As a result, the brake fluid pressurized by the pump 41 flows into the reservoir tank 17 via the right rear wheel pressure-reducing valve 43e, it becomes difficult for the brake calipers 19a, 19b to boost the brake fluid on all wheels and it is no longer possible to secure the servo brake. To avoid such a situation, the right rear wheel pressure-increasing valve 43d needs to be closed and stopping power distribution to the right rear wheel pressure-increasing valve drive circuit 21d is thought of as one method for realizing this. In this way, since the right rear wheel pressure-increasing valve drive circuit 21d can be said to be allowed to become deenergized simultaneously with the right rear wheel pressure-reducing valve drive circuit 21e, a common power relay can be used for these circuits. These are the reasons that the fifth to seventh constraints are provided and performing grouping in consideration of these constraints can reduce the number of power relays and thereby reduce the size and weight of the brake control system 1.

Fig. 8 is a diagram showing an example of grouping of the valve drive circuits 21 based on the fifth to seventh constraints. A, B in Fig. 8 are group names defined for convenience' sake and mean that the valve drive circuits 21 which belong to the same group have a common power relay. That is, the same number of power relays as the group names are provided.

There is another constraint on the grouping shown in Fig. 8 that regards the left front wheel pressure-increasing valve drive circuit 21b and the right rear wheel pressure-increasing valve drive circuit 21d as belonging to different groups and this will be referred to as an eighth constraint hereinafter. Here, the reason for providing the eighth constraint will be explained.

In the brake control system 1 according to the third embodiment, since both the left front wheel pressure-increasing valve 43b and the right rear wheel pressure-increasing valve 43d are normally closed valves, when power distributions to these valve drive circuits 21b, 21d are simultaneously stopped, both valves are closed. As a result, since the pump 41 and the brake calipers 19a, 19b are shut off, it becomes difficult for the brake calipers 19a, 19b on all wheels to boost the brake fluid and it is no longer possible to secure the servo brake. That is, the braking forces of all wheels distributed by the first hydraulic pressure unit 14 will fall.

To avoid such a situation, it is necessary to provide a different power relay as the power shutoff means located upstream of the valve drive circuits 21 which control valves which operate so as to shut off the pump 41 and the reservoir tank 17 when deenergized, that is, normally closed valves out of the plurality of hydraulic pressure control valve 43 located closest to the pump 41 in one cycle of fluid channels communicating from the pump 41 as a hydraulic pressure source to the reservoir tank 17 as a reservoir. These are the reasons that the eighth constraint is provided and performing grouping in consideration of this can reduce the number of wheels whose brake forces fall and thereby secure a stable braking force meeting the driver's request even in case of malfunction.

The brake control system 1 shown in Fig. 7 shows the configuration 1 in Fig. 8, but other configurations can also be naturally adopted in the third embodiment. As described above, the brake control system 1 according to the third embodiment of the present invention prevents one malfunction from affecting control of brake hydraulic pressures of the plurality of brake calipers 19, can generate necessary and sufficient braking forces on predetermined wheels and thereby safely stop the vehicle.

As described above, the embodiments of the present invention have been explained according to the drawings, but these are merely some embodiments and the present invention can be implemented modified or improved in various ways based on the knowledge of those skilled in the art.

In this way, the embodiments of the present invention have a feature of including the following configurations. That is, the brake control system adopts a configuration including a plurality of fluid channels (61, 62, 64, 53, 61, and 61, 68, 70, 72, 74 and 61, 62, 64, 65, 51) communicating from a hydraulic pressure source (pump 41) to a reservoir (tank 17) for controlling brake hydraulic pressures supplied to a plurality of brake calipers (19a, 19b) by a plurality of hydraulic pressure control valves (43) arranged in the respective fluid channels, wherein when all hydraulic pressure control valves provided for one fluid channel are valves (normally open valves) which operate so as to communicate the hydraulic pressure source and the reservoir when deenergized, different power supplies or power shutoff means (8, 9) are provided for at least two of the valve drive circuits (21) which control these valves.

Furthermore, the above described brake control system adopts a configuration, wherein a common power supply or power shutoff means of the valve drive circuits is used for controlling those used to control the same brake calipers (43a, 43c) of the plurality of the hydraulic pressure control valves (43a, 43c, 43e) located closest to the reservoir in the respective fluid channels.

Furthermore, the brake control system adopts a configuration including a plurality of fluid channels (61, 62, 64, 53, 61, and 61, 68, 70, 72, 74 and 61, 62, 64, 65, 51) communicating from a hydraulic pressure source (pump 41) to a reservoir (tank 17) for controlling brake hydraulic pressures supplied to a plurality of brake calipers (19a, 19b) by a plurality of hydraulic pressure control valves (43) arranged in the respective fluid channels, wherein different power supplies or power shutoff means (8, 9) of valve drive circuits are arranged to control different brake calipers ((43a, 43c) and 43e) out of the plurality of hydraulic pressure control valves (43a, 43c, 43e) located closest to the reservoir in the respective fluid channels.

Furthermore, the brake control system adopts a configuration including a plurality of fluid channels communicating from a hydraulic pressure source to a reservoir for controlling brake hydraulic pressures supplied to a plurality of brake calipers by a plurality of hydraulic pressure control valves arranged in the respective fluid channels, wherein different power supplies or power shutoff means (8, 9) of valve drive circuits are arranged to control valves (normally closed valve) that operate so as to shut off the hydraulic pressure source and the reservoir when deenergized out of the plurality of hydraulic pressure control valves (43b, 43d in Fig. 7) located closest to the hydraulic pressure source (41) in the respective fluid channels.

Furthermore, the above described brake control system adopts a configuration, wherein when the hydraulic pressure control valve (43b in Fig. 7) located closest to the hydraulic pressure source (41) in one fluid channel is a valve (normally closed valve) that operates so as to shut off the hydraulic pressure source and the reservoir when deenergized, a common power supply or power shutoff means (8 or 9) of the valve drive circuit which controls all the hydraulic pressure control valves (43b, 43a, 43c) provided for the fluid channel is used (43b and 43c are normally closed valves and 43a is a normally open valve). In the same way, common power shutoff means may be used for 43d and 43e.

It should be further understood by those skilled in the art that although the foregoing description has been made on embodiments of the invention, the invention is not limited thereto and various changes and modifications may be made without departing from the spirit of the invention and the scope of the appended claims.

The above features and embodiments can be combined in any way partly or as a whole.

## Claims

1. A brake control system comprising a hydraulic power source (41), a hydraulic reservoir (17), a plurality of hydraulic flow paths (51, 53, 61-74) extending from the hydraulic power source (41) to the hydraulic reservoir (17), and a plurality of hydraulic control valves (43) arranged on the hydraulic flow paths (51, 53, 61-74) to control hydraulic braking pressures supplied to respective brake calipers (19),
wherein the system further comprises:
valve drive circuits (21) for driving electrically the hydraulic control valves (43) respectively, and
one of a combination of at least two electric power source breakers (8, 9) as switch elements connected electrically to the valve drive circuits (21) respectively to supply the electric power to the valve drive circuits (21) and a combination of at least two electric power source systems (8, 9) as the switch elements connected electrically to the valve drive circuits (21) respectively to supply the electric power to the valve drive circuits (21),
wherein all of the hydraulic control valves (43) on one of the hydraulic flow paths (51, 53, 61-74) are normally open valves for allowing a fluidal communication between the hydraulic power source (41) and the hydraulic reservoir (17) when being prevented from electrically energized, and at least two of the valve drive circuits (21) for driving respectively the all of the hydraulic control valves (43) are electrically connected respectively to the switch elements of the one of the combination so that a failure in supplying the hydraulic braking pressures to all of the calipers (19) is prevented when a malfunction of one of the switch elements of the one of the combination occurs.

2. A brake control system comprising a hydraulic power source (41), a hydraulic reservoir (17), a plurality of hydraulic flow paths (51, 53, 61-74) extending from the hydraulic power source to the hydraulic reservoir (17), and a plurality of hydraulic control valves (43) arranged on the hydraulic flow paths (51, 53, 61-74) to control hydraulic braking pressures supplied to respective brake calipers (19),
wherein the system further comprises:
valve drive circuits (21) for driving electrically the hydraulic control valves (43)respectively, and
one of a combination of at least two electric power source breakers (8, 9) as switch elements connected electrically to the valve drive circuits (21) respectively to supply the electric power to the valve drive circuits (21) and a combination of at least two electric power source systems (8, 9) as the switch elements connected electrically to the valve drive circuits (21) respectively to supply the electric power to the valve drive circuits (21),
wherein at least two of the valve drive circuits (21) for driving respectively ones of the hydraulic control valves (21) which ones are proximate to the hydraulic reservoir (17) on the hydraulic flow paths (51, 53, 61-74) respectively to supply the hydraulic braking pressures to the respective brake calipers (19) are electrically connected respectively to the switch elements of the one of the combination so that a failure in supplying the hydraulic braking pressures to all of the brake calipers (19) is prevented when a malfunction of one of the switch elements of the one of the combination occurs.

3. The brake control system according to claim 1, wherein the valve drive circuits (21) for driving respectively ones of the hydraulic control valves (43) which ones are proximate to the hydraulic reservoir (17) on the hydraulic flow paths (51, 53, 61-74) respectively to supply the hydraulic braking pressure to one of the brake calipers (19) are electrically connected to one of the switch elements of the one of the combination.

4. The brake control system according to claim 2, wherein the valve drive circuits (21) for driving respectively ones of the hydraulic control valves (43) which ones are proximate to the hydraulic reservoir (17) on the hydraulic flow paths (51, 53, 61-74) respectively to supply the hydraulic braking pressure to one of the brake calipers (19) are electrically connected to one of the switch elements of the one of the combination.

5. A brake control system comprising a hydraulic power source (41), a hydraulic reservoir (17), a plurality of hydraulic flow paths (51, 53, 61-74) extending from the hydraulic power source (41) to the hydraulic reservoir (17), and a plurality of hydraulic control valves (43) arranged on the hydraulic flow paths (51, 53, 61-74) to control hydraulic braking pressures supplied to respective brake calipers (19),
wherein the system further comprises:
valve drive circuits (21) for driving electrically the hydraulic control valves (43) respectively, and
one of a combination of at least two electric power source breakers (8, 9) as switch elements connected electrically to the valve drive circuits (21) respectively to supply the electric power to the valve drive circuits (21) and a combination of at least two electric power source systems (8, 9) as the switch elements connected electrically to the valve drive circuits (21) respectively to supply the electric power to the valve drive circuits (21),
wherein the valve drive circuits (21) for driving respectively ones of the hydraulic control valves (43) which ones are proximate to the hydraulic power source (41) on the hydraulic flow paths (51, 53, 61-74) respectively to shut off a fluidal communication between the hydraulic power source (41) and the hydraulic reservoir (17) as normally close valves when being electrically deenergized are electrically connected respectively to the switch elements of the one of the combination so that a failure in supplying the hydraulic braking pressures to all of the brake calipers (19) is prevented when a malfunction of one of the switch elements of the one of the combination occurs.

6. The brake control system according to claim 5, wherein the valve drive circuits (21) for driving respectively all of the hydraulic control valves (43) on one of the hydraulic flow paths (51, 53, 61-74) on which each of the ones of the hydraulic control valves (43) is arranged are electrically connected to one of the switch elements of the one of the combination so that the braking pressure is generated by pressing a brake pedal (100) when a failure of one of the switch elements of the one of the combination occurs.

7. A brake control system comprising a hydraulic power source (41), a hydraulic reservoir (17), a first hydraulic flow path for fluidly connecting the hydraulic power source (41) through one of left and right wheel pressure increasing valves (43b, 43d) and one of left and right wheel pressure decreasing valves (43c, 43e) to the hydraulic reservoir (17), a second hydraulic flow path for fluidly connecting the hydraulic power source (41) through the other one of left and right wheel pressure increasing valves (43b, 43d) and the other one of left and right wheel pressure decreasing valves (43c, 43e) to the hydraulic reservoir (17), and a third hydraulic flow path for connecting the hydraulic power source (41) through the one of left and right wheel pressure increasing valves (43b, 43d), a master shut-off valve (43a) and a master cylinder (16) to the hydraulic reservoir (17),
wherein the master shut-off valve (43a) is closed when a brake control is kept normal and is opened to apply a braking pressure generated by a brake pedal (100) through the master cylinder (16) to the one of left and right wheels (102) when the brake control is abnormal,
the system further comprises,
valve drive circuits (21) for driving electrically the pressure increasing valves (43b, 43d), the pressure decreasing valves (43c, 43e) and the master shut-off valve (43a) on the first, second and third hydraulic flow paths (51, 53, 61-74), and
one of a combination of at least two electric power source breakers (8, 9) as switch elements connected electrically to the valve drive circuits (21) respectively to supply the electric power to the valve drive circuits (21) and a combination of at least two electric power source systems (8, 9) as the switch elements connected electrically to the valve drive circuits (21) respectively to supply the electric power to the valve drive circuits (21),
the one of left and right wheel pressure decreasing valves (43c) on the first hydraulic flow path is a normally close valve allowing a fluidal communication between the hydraulic power source (41) and the hydraulic reservoir (17) when being energized electrically, the other one of left and right wheel pressure increasing valves (43b, 43d) and the other one of left and right wheel pressure decreasing valves (43e) on the second hydraulic flow path are normally open valves allowing the fluidal communication between the hydraulic power source (41) and the hydraulic reservoir (17) when being deenergized electrically,
two of the valve drive circuits (21b, 21d) for driving respectively the other one of left and right wheel pressure increasing valves (43d) and the other one of left and right wheel pressure decreasing valves (43e) are electrically connected respectively to the switch elements of the one of the combination,
the one of left and right wheel pressure increasing valves (43b) and the master shut-off valve (43a) on the third hydraulic flow path are normally open valves allowing the fluidal communication between the hydraulic power source (41) and the hydraulic reservoir (17) when being deenergized electrically, and
the other two of the valve drive circuits (21b, 21c) for driving respectively the one of left and right wheel pressure increasing valves (43b) and the master shut-off valve (43a) are electrically connected respectively to the switch elements of the one of the combination.

8. A brake control apparatus for applying braking forces to rotatable first and second wheels (102) respectively by energizing hydraulically respective first and second hydraulic actuators (19) to generate frictional forces on the first and second wheels (102) respectively, comprising,
a first set including an electrically controlled inlet valve (43b) for allowing a pressurized hydraulic fluid to flow into the first hydraulic actuator (19a) to increase the braking force and an electrically controlled outlet valve (43c) for allowing the hydraulic fluid to flow out of the first hydraulic actuator (19a) to decrease the braking force,
a second set including an electrically controlled inlet valve (43d) for allowing the pressurized hydraulic fluid to flow into the second hydraulic actuator (19b) to increase the braking force and an electrically controlled outlet valve (43e) for allowing the hydraulic fluid to flow out of the second hydraulic actuator (19b) to decrease the braking force, and
first and second electric switches (8, 9) for switching on and off electric powers to be supplied to the valves (43),
wherein the first electric switch (8) is capable of switching on and off the electric power to be supplied to the outlet valve (43c) of the first set and the inlet valve (43d) of the second set, and the second electric switch (9) is capable of switching on and off the electric power to be supplied to the inlet valve (43b) of the first set and the outlet valve (43e) of the second set.

9. The brake control apparatus according to claim 8, wherein the outlet valve (43c) of the first set is of normally closed type to be kept closed to prevent the hydraulic fluid from flowing out of the first hydraulic actuator (19a) when the electric power is prevented from being supplied to the outlet valve (43c) of the first set, the inlet valve (43b) of the first set is of normally open type to be kept opened to enable the hydraulic fluid to flow into the first hydraulic actuator (19a) when the electric power is prevented from being supplied to the inlet valve (43b) of the first set, the inlet valve (43d) of the second set is of normally open type to be kept opened to enable the hydraulic fluid to flow into the second hydraulic actuator (19b) when the electric power is prevented from being supplied to the inlet valve (43d) of the second set, and the outlet valve (43e) of the second set is of normally open type to be kept opened to enable the hydraulic fluid to flow out of the second hydraulic actuator (19b) when the electric power is prevented from being supplied to the outlet valve (43e) of the second set.

10. The brake control apparatus according to claim 8 or 9, wherein the valves (43b-e) are capable of being controlled in accordance with an operation of a hydraulic plunger (16) to adjust the braking forces, the first set further comprises a supplemental valve (43a) for controlling a fluidal communication between the first hydraulic actuator (19a) and the hydraulic plunger (16) to allow the hydraulic fluid to be supplied by the hydraulic plunger (16) into the first hydraulic actuator (19a), to allow the hydraulic fluid to flow from the first hydraulic actuator (19a) toward the hydraulic plunger (16) and to prevent the hydraulic fluid from flowing between the first hydraulic actuator (19a) and the hydraulic plunger (16), and the supplemental valve (43a) is of normally open type to be kept opened to allow the hydraulic fluid to flow between the first hydraulic actuator (19a) and the hydraulic plunger (16) when the electric power is prevented from being supplied to the outlet valve (43c) of the first set and the supplemental valve (43a).

11. The brake control apparatus according to at least one of claims 8 to 10, wherein the first set further comprises a check valve (47a) for allowing the hydraulic fluid to flow in a direction from the inlet valve (43b) of the first set toward at least one of the supplemental valve (43a) and the first hydraulic actuator (19a) and to prevent the hydraulic fluid from flowing in another direction from the at least one of the supplemental valve (43a) and the first hydraulic actuator (19a) toward the inlet valve (43b) of the first set.
